# EUROPÄISCHE PATENTSCHRIFT

(11) **EP 0 553 487 B1**
(45) Veröffentlichungstag und Bekanntmachung des Hinweises auf die Patenterteilung: **09.09.1998**
(21) Anmeldenummer: 92122007.5
(22) Anmeldetag: 24.12.1992
(51) Int. Cl.: H04M 1/00, H04M 3/42

(54) **Verfahren zur Erleichterung der Bedienung von Endgeräten in Fernmeldeanlagen**
Method for facilitating the operation of telecommunication systems terminals
Procédé pour faciliter la commande de terminaux de systèmes de télécommunications

(30) Priorität: 25.01.1992 DE 4202040; 25.01.1992 DE 4202041
(43) Veröffentlichungstag der Anmeldung: 04.08.1993
(73) Patentinhaber: ALCATEL ALSTHOM COMPAGNIE GENERALE D'ELECTRICITE, 75008 Paris (FR)
(72) Erfinder: Käuffert, Uwe Werner, W-7530 Pforzheim (DE); Lücke, Wilfried, W-7140 Ludwigsburg 10 (DE)
(74) Vertreter: Knecht, Ulrich Karl, Dipl.-Ing.

(56) Entgegenhaltungen:
- EP-A- 0 120 476
- EP-A- 0 120 477
- EP-A- 0 173 264
- EP-A- 0 279 233
- DE-A- 4 008 598
- DE-C- 3 139 501
- PATENT ABSTRACTS OF JAPAN vol. 14, no. 479 (E-992)18. Oktober 1990 & JP-A-21 96 559

## Beschreibung

Die vorliegende Erfindung bezieht sich auf ein Verfahren zur Bedienung von Endgeräten nach dem Oberbegriff des Anspruchs 1.

Aus dem Stand der Technik EP 0 173 264 ist ein Verfahren für eine Wählnebenstellenanlage bekannt, bei der ein jeweils berechtigter Teilnehmer verschiedene Leistungsmerkmale aktivieren kann. Durch eine an einer Fernsprechstation erfolgende einfache Signalgabe wird eine Aussage über ein Leistungsmerkmal sinnlich wahrnehmbar angezeigt. Dann kann, sofern innerhalb einer vorgegebenen Zeitspanne die gleiche Signalgabe erneut erfolgt, eine Folgefunktion ausgelöst werden, oder aber, insofern keine erneute Signalgabe innerhalb einer Zeit erfolgt, selbsttätig ein nächstes mögliches Leistungsmerkmal in der Fernsprechstation angezeigt werden.

Weiter ist bei einem aus DE 33 29 768 C2 bekannten Verfahren zur Erleichterung der Bedienung von Endgeräten innerhalb des Funktionstastenfeldes eine bestimmte Taste vorgesehen, mit deren Hilfe die mit den Funktionstasten auslösbaren Funktionen gesperrt werden, bevor durch Betätigen einer der Funktionstasten ein deren Funktion erläuternder Text auf der Anzeigeeinrichtung wiedergegeben werden kann. Zur Aufhebung der Funktionssperre der Funktionstasten sind mehrere Möglichkeiten vorgegeben, nämlich daß entweder die bestimmte Taste nochmals gedrückt wird oder daß die bestimmte Taste gedrückt bleibt und nach Loslassen die Sperre aufgehoben wird oder daß ohne weiteres Betätigen der bestimmten Taste die Sperre dann nach einer bestimmten Zeit aufgehoben wird, wenn keine weitere Funktionstaste betätigt wird.

Dies ist relativ aufwendig im Bedienungsablauf und zeitraubend. Darüber hinaus bedarf es zur Verwirklichung einer gesonderten Taste, der im übrigen keinerlei weitere Funktion zugeordnet werden kann, so daß dies der Notwendigkeit, aus Platzgründen möglichst wenige Tasten vorzusehen, entgegenläuft. Ferner wird bei dem zuvor geschilderten Verfahren mit der Hilfstaste nur das der betreffenden Funktionstaste zugeordnete Leistungsmerkmal erklärt, da die Beschriftung der betreffenden Funktionstaste in der Regel nur mehr oder weniger verständliche Symbole oder Abkürzungen besitzt.

**Aufgabe** der vorliegenden Erfindung ist es, ein Verfahren zur Erleichterung der Bedienung von Endgeräten der eingangs genannten Art zu schaffen, das weniger Tastenbetätigungen notwendig macht und das zu einer optimierten Bedienungsführung führt.

Diese Aufgabe wird erfindungsgemäß durch die Lehre des Patentanspruches 1 gelöst.

Mit Hilfe des erfindungsgemäßen Verfahrens nach Patentanspruch 1 ist es möglich, ohne ein Sperren bzw. Entsperren der durch die Funktionstaste auslösbaren Funktionen auszukommen. Auf diese Weise ist eine einfachere Bedienung bei weniger Tastenbetätigungen gegeben, so daß lediglich die Funktionstasten in den Bedienablauf mit eingebunden sind.

Um die Bedienung von Endgeräten für Benutzer mit oder den Benutzer an die Bedienung derartiger Endgeräte heranzuführen oder damit vertraut zu machen und dabei gleichbleibende optimierte Bedienerführung auch mit der Steigerung des Vertrautwerdens des Benutzers mit dem Endgerät zu erhalten, sind gemäß einem weiteren bevorzugten Ausführungsbeispiel vorliegender Erfindung vorgesehen.

Dadurch ist ein auf die Erfahrung bzw. den Lernerfolg des Anwenders abzielendes Verfahren geschaffen, dessen sogenannte Trainingsstufen vom Bedienenden manuell oder auch durch das Verhalten des Bedienenden automatisch, aber in jedem Falle von der jeweiligen Bedienungsperson abhängig gewählt werden können.

Dabei ist es zweckmäßig, wenn gemäß den Merkmalen des Anspruchs unter den vorgenannten Ausführungsformen für ungeübte Benutzer, geübtere Benutzer und wohlgeübte und erfahrene Benutzer ausgewählt werden kann. Es versteht sich, daß auch nur zwei oder mehr als drei derartiger Stufen vorgesehen werden können.

Ein weiterer Vorteil ist, daß beispielsweise für einen ungeübten Benutzer ausführlichere Hinweise zur Ausführung betreffender Funktionen gegeben werden können als z. B. geübten Benutzern.

Ein geübterer Benutzer hingegen erhält eine Anzeige der Funktion nur dann, wenn er dies ausdrücklich wünscht.

Die Art und Weise oder der Umfang der Betätigung der betreffenden Funktionstaste kann in unterschiedlicher Weise verwirklicht werden.

Auf diese Weise wird dem ungeübten Benutzer stets zuerst die betreffende Funktion ins Gedächtnis gebracht, bevor sie von ihm ausgeführt wird.

In Ausgestaltung dieser für den schon geübteren Benutzer vorgesehenen Ausführungsform sind die Merkmale gemäß Anspruch 4 vorgesehen, was zu einer Eindeutigkeit der gewünschten Auslösung bzw. zu einer weiteren Vereinfachung der Bedienung führt.

Für einen zumindest im Hinblick auf einen Teil der möglichen Funktions- oder Leistungsmerkmale geübteren Benutzer ist es zweckmäßig, wenn die Merkmale gemäß Anspruch 5 vorgesehen sind. Dies bedeutet, daß dem geübteren Benutzer ausschließlich dann die auszulösende Funktion ins Gedächtnis gerufen wird, wenn sein Verhalten zeigt, daß er diese betreffende Funktion nicht oder nur ungenügend in sich aufgenommen hat.

Eine weitere Vereinfachung der Bedienung ergibt sich mit den Merkmalen der Ansprüche 6 und/oder 7.

Weitere Einzelheiten der Erfindung sind der folgenden Beschreibung zu entnehmen, in der die Erfindung anhand der in den Zeichnungen dargestellten Ausführungsbeispiele näher beschrieben und erläutert ist. Es zeigen:
- Figur 1: ein Blockschaltbild einer Schaltungsanordnung zur Durchführung eines Verfahrens zur Bedienung von Endgeräten gemäß einem Ausführungsbeispiel vorliegender Erfindung.
- Figur 2: ein Blockschaltbild einer Schaltungsanordnung zur Durchführung eines Verfahrens zur Bedienung von Endgeräten gemäß einem anderen Ausführungsbeispiel vorliegender Erfindung.

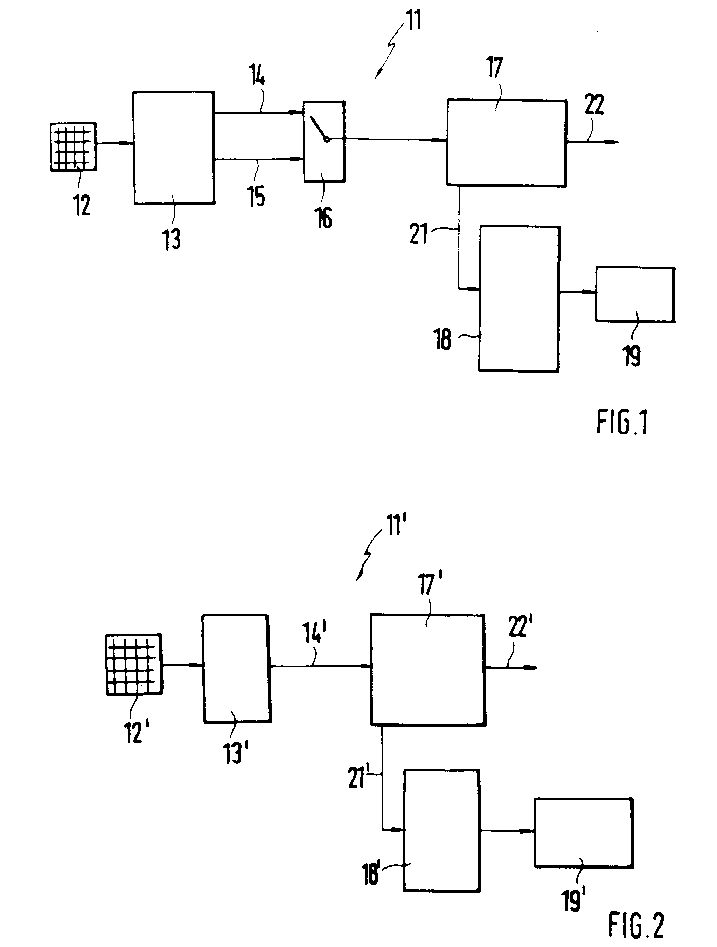

Gemäß Figur 1 besitzt ein Endgerät 11, bspw. in Form eines Telefonapparates, für eine im ISDN-System betriebene Fernmeldeanlage außer nicht dargestellten Zifferntasten eine Vielzahl von als Matrix 12 dargestellten Funktionstasten fester oder variabler Zuordnung, die mit einer Tastaturabfrageeinheit 13 verbunden sind. Die Tastaturabfrageeinheit 13 ist mit zwei Ausgängen 14 und 15 versehen, die über eine Schaltereinheit 16 mit einer Datenverarbeitungseinheit, bspw. in Form eines Mikroprozessors 17 verbunden ist. Der Mikroprozessor 17 steuert über einen ersten Ausgang 21 einen Textspeicher 18 an, welcher mit einer Anzeigeeinrichtung 19 verbunden ist, die zur optischen Darstellung alphanumerischer Zeichen geeignet ist oder die für eine akustische Sprachansage ausgestattet ist. Jeder Funktionstaste des Funktionstastenfeldes 12 ist ein bestimmter vorzugsweise ausführlicher Text zur Angabe der damit auslösbaren Funktion im Textspeicher 18 zugeordnet, welcher Text durch die Anzeigeeinrichtung 19 in geeigneter Weise wiedergegeben wird. Über einen zweiten Ausgang 22 ist der Mikroprozessor 17 mit einer nicht dargestellten Steuereinrichtung zur Auslösung von Steuervorgängen verbunden.

Mit dem Endgerät ist es möglich, die jeder der Funktionstasten des Funktionstastenfeldes 12 zugeordnete Funktion Leistungsmerkmal entweder auszulösen oder zunächst zur Erläuterung schriftbildlich oder akustisch wiederzugeben, bevor sie ausgeführt wird. Diese Auswahl der beiden Möglichkeiten, die Funktion der betreffenden Funktionstaste entweder anzuzeigen und anschließend ggf. auszuführen oder gleich auszuführen, ist durch die Art und Weise und/oder den Umfang d.h. die Zeit der Betätigung der jeweiligen Funktionstaste des Funktionstastenfeldes 12 vorgegeben.

Eine erste Betätigungsart der Funktionstasten und deren Auswertung durch die Tastaturabfrageeinheit 13 besteht darin, daß ein erstmaliges Betätigen einer der Funktionstasten dazu führt, daß die zugeordnete Funktion in der Anzeigeeinrichtung 19 wiedergegeben wird, und daß bei einem nochmaligen Betätigen derselben Funktionstaste die betreffende Funktion oder das Leistungsmerkmal ausgeführt wird. Diese Verfahrensvariante erfolgt über den Ausgang 14 der Tastaturabfrageeinheit 13, wenn diese Variante durch die Schaltereinheit 16 angewählt ist.

Eine andere mit der Schaltereinheit 16 anwählbare Verfahrensvariante besteht darin, den Umfang, bspw. die Zeit der Betätigung einer der Funktionstasten aus dem Funktionstastenfeld entsprechend vorzugeben. Dabei wird bei einem kurzen Betätigen der betreffenden Funktionstaste die betreffende Funktion oder das Leistungsmerkmal sofort ausgeführt. Will der Bedienende eine Information über die mit einer bestimmten Funktionstaste auszulösende Funktion haben, so muß diese betreffende Funktionstaste über einen längeren Zeitraum hinweg betätigt werden, wodurch über den Mikroprozessor 17 aus dem Textspeicher der dieser Funktionstaste zugeordnete Anzeigetext in die Anzeigeeinrichtung 19 gebracht wird.
Mit anderen Worten, bei der genannten ersten Variante ist es dem ungeübten Benutzer möglich, jeweils vor jeder Ausführung einer Funktion sich zu vergewissern, welche der Funktionen oder Leistungsmerkmale dadurch ausgelöst und ausgeführt werden wird. Bei der o.g. zweiten Variante bleibt es dem Benutzer überlassen, ob die Funktion oder das Leistungsmerkmal sofort ausgeführt werden soll, oder ob er durch die Wiedergabe in der Anzeigeeinrichtung 19 sich über die auszulösende Funktion nochmals im Klaren werden möchte.

Gemäß einem in der Zeichnung nicht dargestellten Ausführungsbeispiel vorliegender Erfindung können diese beiden Varianten in der Art und Weise und dem Umfang der Betätigung der Funktionstasten jeweils separat in einem Endgerät verwirklicht sein. Gemäß dem in Fig. 1 dargestellten Ausführungsbeispiel ist jedoch das Endgerät 11 mit beiden Varianten bestückt, die durch die Tastaturabfrageeinheit 13 getrennt und differenziert erkannt und ausgewertet und über die Schaltereinheit 16 vom Bedienenden manuell ausgewählt und am Endgerät 11 eingestellt werden können.

In weiterer Ausgestaltung des Ausführungsbeispieles nach Fig. 1 ist es möglich, in nicht dargestellter Weise einen dritten Ausgang der Tastaturabfrageeinheit 13 über die Schaltereinheit 16 zum Prozessor 17 zu führen. Wird dieser Weg mit Hilfe der Schaltereinheit 16 durchgeschaltet, so wird jede Betätigung einer Funktionstaste aus dem Funktionstastenfeld 12 von der Prozessoreinheit 17 als Auslösung der betreffenden Funktion oder des betreffenden Leistungsmerkmales verstanden und, wenn dies zum betreffenden Betriebszeitpunkt möglich ist, über den zweiten Ausgang 22 zur Steuereinrichtung weitergegeben. Erkennt jedoch die Mikroprozessoreinheit 17, daß es sich um eine Fehlbedienung handelt, bspw. dadurch, daß diese Funktion beim derzeitigen Betriebszustand nicht möglich ist, oder dadurch, daß während des Ausführens dieser Funktion diese vom Bedienenden wieder unterbrochen wird, so bewirkt die Mikroprozessoreinheit 17, daß für diese Funktion oder die Funktion der nachfolgend betätigten Funktionstaste der entsprechende Text in der Anzeigeinrichtung 19 zuerst zur Anzeige gebracht wird.

Bei dem in Fig. 2 dargestellten Ausführungsbeispiel besitzt das Endgerät 11' neben den nicht dargestellten Zifferntasten ebenfalls ein Funktionstastenfeld 12', eine Tastaturabfrageeinheit 13', eine Datenverarbeitungseinheit in Form eines Mikroprozessors 17', dessen einer Ausgang 22' zu einer Steuereinrichtung und dessen anderer Ausgang 21' zum Textspeicher 18' und von dort zur Anzeigeeinrichtung 19' führt.
Wie beim Ausführungsbeispiel der Fig. 1 kann die Tastaturabfrageeinheit 13' zwischen den o.g. zwei oder drei Varianten hinsichtlich der Art und Weise bzw. des Umfanges der Betätigung der einzelnen Funktionstasten des Funktionstastenfeldes 12' differenzieren. Außerdem setzt die Tastaturabfrageeinheit 13' entsprechend der jeweiligen Art und Weise und dem jeweiligen Umfang der Betätigung diese in einen Tastencode um und führt die kodierten Ausgangssignale zum Mikroprozessor 17'. Die Mikroprozessoreinheit 17' entscheidet über die Weiterführung der Steuersignale entweder zur Steuereinrichtung 21' oder zum Textspeicher 18'.

Bei diesem Ausführungsbeispiel ist es möglich, die einzelnen Varianten oder Stufen in der Art und Weise und dem Umfang der Betätigung der Funktionstasten automatisch einzustellen, und zwar abhängig von der Häufigkeit der Benutzung der Wiedergabe in der Anzeigeeinrichtung 19' und der Häufigkeit von Fehlbedienungen. Bspw. beginnt die Mikroprozessoreinheit 17' bei der o.g. ersten Stufe für ungeübte Benutzer und schaltet dann automatisch in die zweite Stufe für geübte Benutzer um, wenn in einer Vielzahl oder den meisten Fällen sofort nach Wiedergeben der Funktion in der Anzeigeeinrichtung 19' das Ausführen der Funktion selbst ausgelöst wird. Dabei entscheidet der Mikroprozessor 17' nach einem vorgegebenen Programm an der Tatsache daran, ob der Bentuzer sehr oft die Funktionserläuterungen abruft oder fast nie, die Frage, ob weiter auf die o.g. dritte Stufe oder wieder zurück auf die erste Stufe geschaltet wird. Es versteht sich, daß hinsichtlich der automatischen Einstellung der einzelnen Stufen weitgehende Varianten möglich sind.

Im Falle der Entscheidung über die Auslösung der Anzeige einer Funktion oder der Auslösung der Ausführung einer Funktion durch die Dauer der Betätigung einer der Funktionstasten ist vorgesehen, eine einstellbare Mindestzeit für die Betätigung der Funktionstaste zum Auslösen einer Anzeige vorzusehen.

Wird durch entsprechendes Betätigen einer der Funktionstasten, in welcher eingestellten Stufe auch immer, die Wiedergabe der Funktion in der Anzeigeeinrichtung 19 bzw. 19 vorgenommen, so kann diese Anzeige nicht nur durch entsprechendes Betätigen derselben Funktionstaste sondern auch durch Betätigen einer anderen Funktionstaste aufgehoben werden.

Es versteht sich, daß die Anzeige der betreffenden Funktion in jeden beliebigen Betriebszustand des Endgerätes, also bspw. sowohl im Ruhezustand als auch im Verbindungszustand, erfolgen kann. Gemäß einem weiteren nicht dargestellten Ausführungsbeispiel vorliegender Erfindung wird das Endgerät 11 bzw. 11' mit dem Betätigen einer Grundstellungstaste in den Ausgangszustand zurückgebracht.

## Patentansprüche

1. Verfahren zur Bedienung von Endgeräten mit einer Eingabetastatur, deren Funktionstasten feste und/oder variable Funktionen zugeordnet werden können, und mit einer Anzeigeeinrichtung, auf der ein die Funktion der Funktionstasten erläuternder Text wiedergegeben werden kann, und daß sowohl das Auslösen zur Durchführung der betreffenden Funktion als auch das Auslösen der Anzeige der betreffenden Funktion allein mit Hilfe der betreffenden Funktionstaste ausgeführt wird, dadurch gekennzeichnet, daß die Auswahl der beiden Auslösemöglichkeiten durch die Art und Weise der Betätigung der betreffenden Funktionstaste getroffen wird und eine dieser Stufen entsprechend der Kenntnis des Bedienenden über die Bedienung des Endgerätes entweder von diesem manuell oder automatisch eingestellt wird.

2. Verfahren nach Anspruch 1, dadurch gekennzeichnet, daß die Auswahl der beiden Auslösemöglichkeiten durch den Umfang der Betätigung der betreffenden Funktionstaste getroffen wird.

3. Verfahren nach Anspruch 1, dadurch gekennzeichnet, daß zum Auslösen der Anzeige einer Funktion die betreffende Funktionstaste ein erstes Mal lang und zum anschließenden Auslösen zur Durchführung der Funktion dieselbe Funktionstaste ein zweites Mal kurz betätigt wird.

4. Verfahren nach Anspruch 1, dadurch gekennzeichnet, daß zum Auslösen der Anzeige einer Funktion die betreffende Funktionstaste gleich oder länger als eine vorzugsweise einstellbare Mindestzeit gedrückt wird.

5. Verfahren nach Anspruch 1, dadurch gekennzeichnet, daß das Auslösen der Anzeige einer Funktion der Funktionstasten durch eine bestimmte, vorzugsweise einstellbare Fehlbedienungsquote der betreffenden oder aller Funktionstasten bestimmt wird.

6. Verfahren nach Anspruch 1, dadurch gekennzeichnet, daß zum Aufheben der Anzeige der Funktion einer bestimmten Funktionstaste eine andere der Funktionstasten betätigt wird.

7. Verfahren nach Anspruch 1, dadurch gekennzeichnet, daß mit dem Betätigen einer Grundstellungstaste das Endgerät in den Ausgangszustand gebracht wird.

## Claims

1. Method of operating terminal appliances having an input keyboard to whose function keys fixed and/or variable functions can be assigned and having a display device on which a text explaining the function of the function keys can be displayed, both the performance of the respective function and the display of the respective function being initiated solely with the aid of the respective function key, characterized in that the selection of the two actuation options is made by the manner of actuating the respective function key and one of these steps is adjusted either manually or automatically by the operator in accordance with the latter's knowledge concerning the operation of the terminal appliance

2. Method according to Claim 1, characterized in that the selection of the two actuation options is made by the scope of the actuation of the respective function key.

3. Method according to Claim 1, characterized in that, to initiate the display of a function, the respective function key is pressed for a long period the first time and, subsequently to initiate the performance of the function, the same function key is pressed for a short period the second time.

4. Method according to Claim 1, characterized in that, to initiate the display of a function, the respective function key is pressed for a time equal to or longer than a preferably adjustable minimum time.

5. Method according to claim 1, characterized in that the initiation of the display of a function of the function keys is determined by a certain, preferably adjustable incorrect operation rate of the respective function key or of all the function keys.

6. Method according to Claim 1, characterized in that, to cancel the display of the function of a certain function key, another of the function keys is pressed.

7. Method according to Claim 1, characterized in that the terminal is set to the initial state by pressing a basic setting key.

## Revendications

1. Procédé pour utiliser les terminaux avec un clavier d'entrée, dont les touches de fonction peuvent se voir attribuer des fonctions fixes et/ou variables, et avec un dispositif d'affichage, sur lequel on peut restituer un texte expliquant la fonction des touches fonctionnelles, avec lequel le déclenchement pour l'exécution de la fonction concernée de même quc le déclenchement de l'affichage de la fonction concernée sont exécutés uniquement à l'aide de la touche de fonction en question, caractérisé en ce que le choix des deux possibilités dc déclenchement est fait par la nature de l'actionnement de la touche de fonction concernée et l'un de ces niveaux est ajusté en fonction des connaissances de l'utilisateur sur la manipulation du terminal soit manuellement par cet utilisateur soit automatiquement.

2. Procédé selon la revendication 1, caractérisé en ce que le choix des deux possibilités de déclenchement est fait par l'importance de l'actionnement de la touche de fonction concernée.

3. Procédé selon la revendication 1, caractérisé en ce que la touche de fonction concernée est actionnée longtemps une première fois pour le déclenchement de l'affichage d'une fonction et la même touche de fonction est actionnée brièvement une deuxième fois pour le déclenchement consécutif pour l'exécution de la fonction.

4. Procédé selon la revendication 1, caractérisé en ce que la touche de fonction concernée est appuyée aussi longtemps ou plus longtemps qu'un temps minimum de préférence réglable pour le déclenchement de l'affichage d'une fonction.

5. Procédé selon la revendication 1, caractérisé en ce que le déclenchement de l'affichage d'une fonction des touches fonctionnelles est déterminé par un quota de fausses manoeuvres qui est défini, de préférence réglable, pour la touche de fonction concernée ou l'ensemble des touches de fonction.

6. Procédé selon la revendication 1, caractérisé en ce qu'une autre touche de fonction est actionnée pour supprimer l'affichage de la fonction d'une touche fonctionnelle définie.

7. Procédé selon la revendication 1, caractérisé en ce que le terminal est amené dans l'état initial avec l'actionnement d'une touche de position initiale.
